# EUROPEAN PATENT SPECIFICATION

(11) **EP 2 722 098 B1**
(45) Date of publication and mention of the grant of the patent: **06.12.2017**
(21) Application number: 13187373.9
(22) Date of filing: 04.10.2013
(51) Int. Cl.: B01D 63/02

(54) **Hollow fiber membrane module and method for preparing the same**
Hohlfasermembranmodul und Verfahren zu dessen Herstellung
Module de membrane à fibres creuses et procédé permettant de le fabriquer

(30) Priority: 17.10.2012 KR 20120115665
(43) Date of publication of application: 23.04.2014
(73) Proprietor: Lotte Advanced Materials Co., Ltd., Jeollanam-do (KR); Lotte Chemical Corporation, Seoul 156-711 (KR)
(72) Inventor: Ahn, Hyoung Wook, Gyeonggi-do (KR); Koo, Young Lim, Gyeonggi-do (KR)
(74) Representative: Michalski Hüttermann & Partner Patentanwälte mbB

(56) References cited:
- WO-A1-2006/045191
- WO-A1-2008/133430
- US-A1- 2002 153 299
- US-A1- 2005 051 481

## Description

### Field of the Invention

The present invention relates to a hollow fiber membrane module and a method for preparing the same. More particularly, the present invention relates to a hollow fiber membrane module, which can be prepared by a simple process without a sealing process, exhibits excellent water passage efficiency, and is capable of being uniformly potted by arranging hollow fiber membranes at regular intervals, and a method for preparing the same.

### Description of the Related Art

Hollow fiber membrane modules are classified into a pressurizing type and a dipping type depending on an operation mode thereof. In a pressurizing type filter, only fluid, except for solids such as impurities, sludge, and the like, is allowed to permeate into a hollow through a surface of a hollow fiber membrane by applying pressure to the fluid to be treated.

Although the pressurizing type filter requires separate facilities for fluid circulation, it has an advantage in that the amount of permeated water per unit time is greater than in a dipping type filter. On the contrary, in the dipping type filter, the hollow fiber membrane is directly dipped into a tank which stores a fluid to be treated, and a negative pressure is applied to the interior of the hollow fiber membrane, thereby allowing only the fluid to be selectively permeated into the hollow through the surface of the hollow fiber membrane, except for solids such as impurities, sludge, and the like. Although the dipping type filter provides a smaller amount of permeated water per unit time than the pressurizing type filter, the dipping type filter has an advantage of reducing costs for facilities and operation by eliminating facilities for fluid circulation.

Both the pressurizing type and dipping type filters may be divided into a both-end water collection type, in which permeated water flowing into the hollow through the hollow fiber membrane is collected by both ends of the hollow fiber membrane, and a single-end water collection type, in which permeated water is collected by one end thereof.

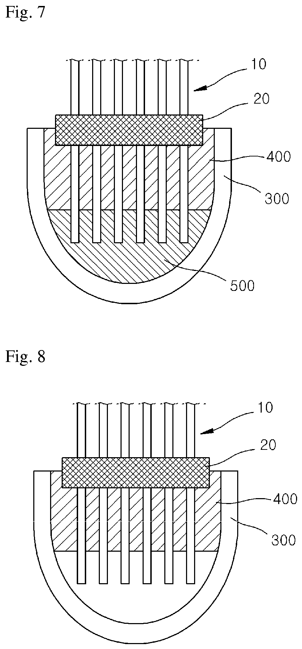

Such a hollow fiber membrane module is prepared by securing a bundle of hollow fiber membranes, having a constant length, to a header. Figs. 7 and 8 illustrate a typical process for preparing a hollow fiber membrane module. The hollow fiber membrane module must be finally treated to have an open end such that one end thereof can be exposed to a fluid. For this purpose, the bundle of hollow fiber membranes or a sheet 10 is dipped into a gel type fugitive material 500 which can be dissolved in water, and then, a potting agent 400 is introduced to perform a potting process. Here, the term "bundle of hollow fiber membranes" refers to a plurality of hollow fiber membranes which are not arranged in a constant form unlike the sheet 10 according to embodiments of the invention. The gel type fugitive material 500 functions to seal an end of the hollow fiber membrane, and allows the end of the hollow fiber membrane to be open by dissolving a gel fluid in water after the potting agent 400 is cured. Fig. 8 illustrates the hollow fiber membrane module after removal of the fugitive material.

In this manner, a method for preparing a hollow fiber membrane module includes a potting process in which a module header collecting fluid selectively permeated into the hollow fiber membrane and a bundle of hollow fiber membranes are secured to a water collection unit. If some of the hollow fiber membranes dipped into the potting material are blocked by the potting material, filtration cannot be performed through the hollow fiber membranes and water passage efficiency is deteriorated. Therefore, there is a need for a process of sealing the end of the hollow fiber membrane, potted into the module header, with a removable material before and after the potting process.

Therefore, there is need for a hollow fiber membrane module, which can be prepared by a simple process without a separate sealing process while improving water passage efficiency.

Hollow fiber membranes, hollow fiber membrane modules comprising these fiber membranes and methods for preparing the same are disclosed in the documents US 2005/051481, WO 2006/045191, WO 2008/133430 and US 2002/153299 WO 2006/045191 discloses specifically a method for potting a prefixed hollow fibre module within a header.

### Summary of the Invention

The above mentioned object is achieved by the invention as defined by the independent claims. The dependent claims detail advantageous embodiments of the invention.

The present invention is directed to providing a hollow fiber membrane module and a method for preparing the same. The hollow fiber membrane module may be prepared by a simple process, have excellent water passage efficiency, be uniformly potted by arranging hollow fiber membranes at regular intervals, and improve preparation efficiency by minimizing a curing time and eliminating a sealing process. In addition, the hollow fiber membrane module may increase density of the hollow fiber membranes potted into a header, does not undergo leakage of a potting agent and does not require a sealing or cutting process by eliminating a process of blocking an end of the hollow fiber membrane, and may reduce an amount of the hollow fiber membrane to be discarded.

One aspect of the present invention relates to a hollow fiber membrane module. The hollow fiber membrane module includes: a header; and a sheet block inserted into the header, wherein the sheet block includes: a block of hollow fiber membrane, wherein the block of hollow fiber membrane comprises a plurality of hollow fiber membranes arranged at regular intervals in a vertical direction of a longitudinal direction of the header; and a resin block formed at each end of the plurality of hollow fiber membranes and contacting an inner wall of the header to be secured thereto, and wherein a space formed between the plurality of hollow fiber membranes from an upper side of the resin block to an inlet of the header is filled with a potting agent to secure the hollow fiber membranes.

In one embodiment, the resin block may be formed of a thermoplastic resin.

The average diameter of the hollow fibers of the membrane module is preferably from ≥0.5mm to ≤10 mm, preferably ≥0.7mm to ≤7 mm.

In one embodiment, a space from a lower side of the resin block to an inner surface of the header may form a water collecting section, and the hollow fiber membrane may protrude into the water collecting section.

In another embodiment, the space from the lower side of the resin block to the inner surface of the header forms a water collecting section, and the hollow fiber membrane may not protrude into the water collecting section.

The header may further include a bump on which the lower side of the resin block is mounted.

Another aspect of the present invention relates to a method for preparing a hollow fiber membrane module. The method includes: arranging a plurality of hollow fiber membranes in a line and preparing a plurality of sheets, in which ends of the plural hollow fiber membranes are bound to each other via a resin binding portion so as to be separated a predetermined distance from each other; stacking the plurality of sheets to prepare a sheet block, on which a resin block is formed to have a width (w2) larger than an arrangement width (w1) of the plural hollow fiber membranes; inserting the sheet block into the header such that the resin block contacts an inner wall of the header to secure the resin block; and securing the plural hollow fiber membranes in a space from an upper side of the resin block to an inlet of the header by potting.

The ratio of w2 to w1 may according to a preferred embodiment of the present invention be ≥1.05:1 to ≤2:1, preferably ≥1.3:1 to ≤1.8:1

The resin binding portion may be formed in a perpendicular direction with respect to a longitudinal direction of the hollow fiber membrane.

The resin binding portion may be formed of a thermoplastic resin.

The sheet block may be inserted into an empty header in which a sealing agent is not present.

A distal end of the hollow fiber membrane protruding from the resin block may be inserted into the header after being cut out.

In the sheet block, a ratio (wl:h) of the arrangement width (w1) of the plural hollow fiber membranes to a stack height (h) of the plurality of sheets may be ≥3: 1 to ≤10:1,. preferably ≥2:1 to ≤8:1

### Brief Description of the Drawing

Figs. 1 to 4 are flow diagrams of a method for preparing a hollow fiber membrane module according to one embodiment of the present invention.
Fig. 5 is a schematic sectional view of a hollow fiber membrane module according to one embodiment of the present invention. Fig. 6 is a schematic sectional view of a hollow fiber membrane module according to another embodiment of the present invention.
Figs. 7 to 8 are schematic diagrams of a header combining portion of a typical hollow fiber membrane module.
Fig. 9 is a schematic diagram of Surface A shown in Fig. 6.

### Detailed description of the Invention

Exemplary embodiments of the present invention will be described hereinafter in more detail with reference to the accompanying drawings. The following embodiments are given by way of illustration to provide a thorough understanding of the invention to those skilled in the art. Likewise, it should be noted that the drawings are not to precise scale and some of the dimensions, such as width, length, thickness, and the like, are exaggerated for clarity of description in the drawings. Although some elements are illustrated in the drawings for convenience of description, other elements will be easily understood by those skilled in the art. It should be noted that the overall drawings are described from the viewpoint of the observer. It will be understood that when an element is referred to as being "on" or "under" another element, the element can be directly formed on or under the other element, or an intervening element(s) may also be present there between. In addition, it should be understood that the present invention may be embodied in different ways by those skilled in the art without departing from the scope of the present invention.

Herein, expressions indicating spatial orientations such as "upper (portion)" and "lower (portion)," are to be construed as indicating relative orientations instead of absolute orientations.

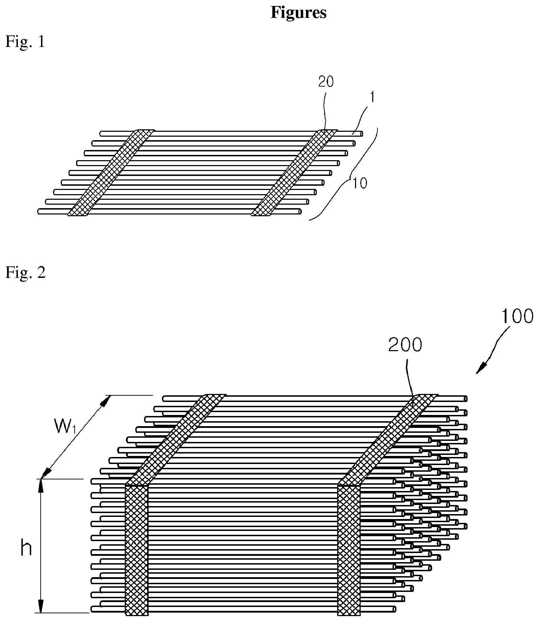

Figs. 1 to 4 are flow diagrams of a method for preparing a hollow fiber membrane module according to one embodiment of the present invention. As shown in Fig. 1, a plurality of hollow fiber membranes 1 is arranged at regular intervals in a line, and ends of the plural hollow fiber membranes are bound to each other via a resin binding portion 20 to be separated a predetermined distance from each other. For example, after winding the plural hollow fiber membranes around a cylindrical roll to be arranged at regular intervals, a first resin binding portion is formed by coating a thermoplastic resin on the plural hollow fiber membranes in a perpendicular direction with respect to an arrangement direction, and a second resin binding portion is formed by coating the resin on another section of the plural hollow fiber membranes in the perpendicular direction. The resin is coated to have a coating width larger than an arrangement width (w1) of the plural hollow fiber membranes such that the width of the resin binding portion is greater than the arrangement width (w1) of the plural hollow fiber membranes.

As shown in Fig. 1, when cut along a line between the first and second resin binding portions, a sheet 10, in which the plural hollow fiber membranes 1 are arranged at regular intervals and are bound at ends thereof to each other by the resin binding portion 20, can be obtained.

The resin binding portion may be formed of a thermoplastic resin. Any resin capable of being compressed upon heating may be applied to the present invention. Examples of the thermoplastic resin may include ethylene vinyl acetate, polyolefin, polystyrene, polycarbonate, polyvinyl chloride, polyamide, and the like, without being limited thereto. In this manner, according to the present invention, since the thermoplastic resin is used as a potting agent instead of a thermosetting resin, there is no need for a curing process, thereby further shortening process time.

To attach the thermoplastic resin to the plural hollow fiber membranes, the thermoplastic resin may be heated above a melting point thereof and compressed.

As used herein, the term "end" does not always refer to an exact distal end of a component, and includes portions near the distal end. For example, the 'end' of a component may include a portion from the exact distal end thereof to a point corresponding to 10% the total length of the component.

A plurality of sheets 10 is stacked to form a sheet block 100, as shown in Fig. 2. Here, the number of stacked sheets 10 is not particularly limited, and may be determined depending on a width of a header. For example, about 5 to about 20 sheets 10 may be stacked to form the sheet block. In one embodiment, in the resin block 200, a ratio (wl:h) of the arrangement width (w1) of the plural hollow fiber membranes to a stacked height (h) of the sheets may be about 3: 1 to about 10:1, preferably about 4 :1 to about 8:1.

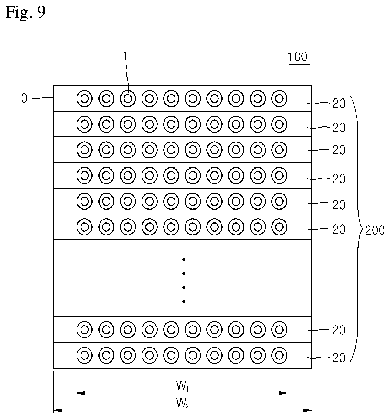

In this manner, with the sheets 10 stacked, the resin binding portions 20 of the sheets are bonded to each other, thereby forming the resin block 200. In addition, after the sheets 10 are stacked, the resin may be further coated such that the sheets are secured to each other. Thus, a section having the resin block 200 formed thereon has a structure wherein the respective hollow fiber membranes 1 are embedded in the resin block 200, as shown in Fig. 9. Therefore, a width (w2) of the resin block 200 is greater than the arrangement width (w1) of the plural hollow fiber membranes.

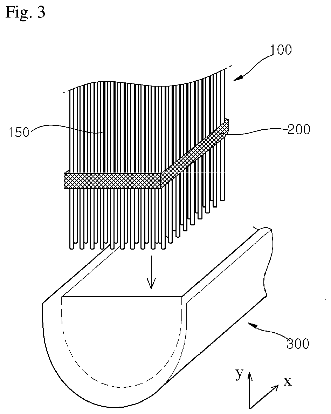

As shown in Fig. 3, the prepared sheet block 100 is inserted into a header 300 in a vertical direction (y-direction) of the header. It should be understood that the present invention is not limited to the shape of the header shown in the drawings. According to the invention the width of the header is increasingly narrower from an inlet of the header to the center of a bottom thereof.

In addition, the sheet block 100 is inserted into an empty space of the header 300, which is not provided therein with any material, such as a sealing agent or the like, to be removed after potting, and thus, all of the ends of the hollow fiber membranes inserted into the header are open instead of being blocked.

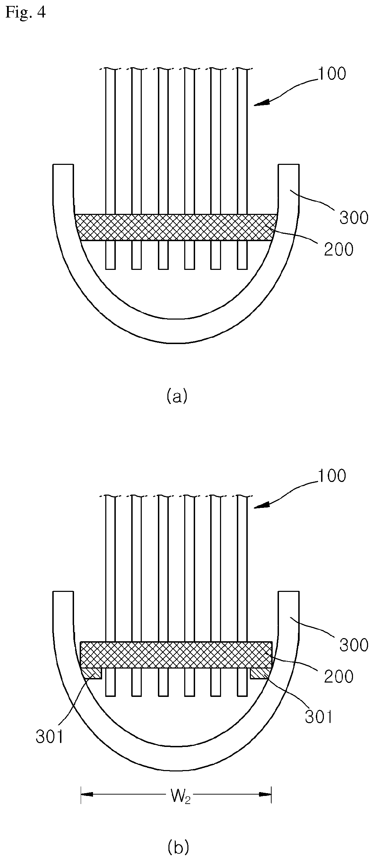

Figs. 4(a) and (b) are sectional views of a portion where the sheet block 100 is coupled to the header 300. Referring to Fig. 4(a), the resin block 200 contacts an inner wall of the header and is secured thereto. According to the invention the resin block has a sufficient width (w2) and a sufficient length such that the resin block is caught by and secured to the inner wall of the header and secured. Fig. 4(b) illustrates one example wherein a bump 301 is formed on the inner wall of the header. Referring to Fig. 4(b), as the bump 301 is formed on the inner wall of the header, a lower side of the resin block 200 contacts the bump 301, so that the resin block 200 can be more safely mounted.

Then, the plural hollow fiber membranes may be further secured by injecting a potting agent into a space from an upper side of the resin block to the inlet 301 of the header and curing the same.

In the method for preparing the hollow fiber membrane module according to the embodiment, since there is no need for a process of sealing the ends of the plural hollow fiber membranes and a process of removing the sealing material before the potting process is thus eliminated, the number of processes can be minimized.

A hollow fiber membrane module prepared by the method according to the embodiment of the invention includes: a header 300 and a sheet block 100 inserted into the header 300. The sheet block 100 including: a block of hollow fiber membrane 150, wherein the block of hollow fiber membrane comprises a plurality of hollow fiber membranes arranged at regular intervals in a vertical direction (y-direction) of the header 300; and a resin block 200 formed at each end of the hollow fiber membrane block and contacting an inner wall of the header to be secured thereto, and wherein a space formed between the plurality of hollow fiber membranes from an upper side of the resin block to an inlet of the header is filled with a potting agent to secure the plural hollow fiber membranes.

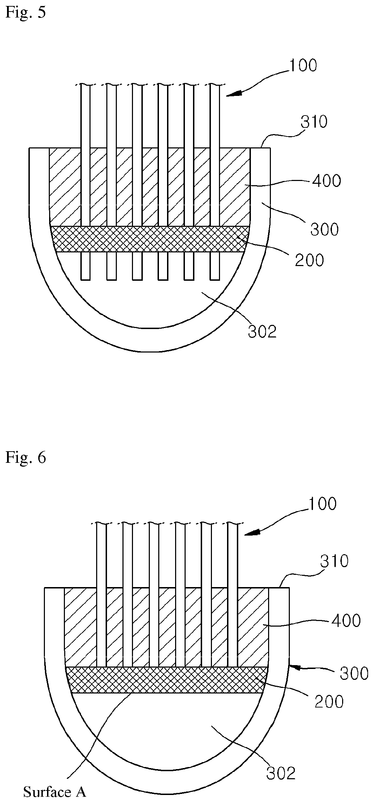

The resin block contacts the inner wall of the header and is secured thereto. A portion of each hollow fiber membrane from the upper side of the resin block to the inlet of the header is secured by the potting agent. Referring to Fig. 5, in this case, the hollow fiber membrane may protrude into a water collecting section 302 formed in a space from a lower side of the resin block to the inner surface of the header.

In another embodiment, before inserting the sheet block 100 into the header, a portion of the hollow fiber membrane protruding from the resin block 200 may be inserted into the header after being cut out. Referring to Fig. 6, in this case, the hollow fiber membrane may not protrude into the water collecting section formed under the resin block 200.

Fig. 9 is a schematic diagram of Surface A shown in Fig. 6. As shown in Fig. 9, the sheets 10 are stacked in a line to provide a structure wherein the hollow fiber membranes are embedded in the resin block 200. Here, the width (w2) of the resin block 200 formed by stacking the resin binding portions 20 is greater than the arrangement width (w1) of the plural hollow fiber membranes. As such, according to the present invention, vertical intervals and horizontal intervals between adjacent hollow fiber membranes are substantially constant and uniform, thereby increasing density of the hollow fiber membranes, unlike an existing method in which a bundle of hollow fiber membranes is used for potting.

## Claims

1. A hollow fiber membrane module comprising:
a header (300); and
a sheet block (100) inserted into the header (300),
wherein the sheet block includes: a block of hollow fiber membrane, wherein the block of hollow fiber membrane (150) comprises a plurality of hollow fiber membranes arranged at regular intervals in a vertical direction of the header (300); and a resin block (200) formed at an end of each of the plurality of hollow fiber membranes and contacting an inner wall of the header (300) to be secured thereto, wherein the resin block (200) is formed to have a width (w2) larger than an arrangement width (w1) of the plural hollow fiber membranes, and
wherein the header (300) is increasingly narrower from an inlet of the header (300) to the center of a bottom thereof,
wherein the sheet block (100) is inserted into the header (300) such that the resin block (200) contacts an inner wall of the header (300) and is secured thereto, and
wherein a space formed between the plurality of hollow fiber membranes from an upper side of the resin block (200) to an inlet of the header (300) is filled with a potting agent (400) to secure the hollow fiber membranes.

2. The hollow fiber membrane module according to claim 1, wherein the resin block (200) is formed of a thermoplastic resin.

3. The hollow fiber membrane module according to claim 1 or 2, wherein a space from a lower side of the resin block (200) to an inner surface of the header (300) forms a water collecting section, and the hollow fiber membrane protrudes into the water collecting section.

4. The hollow fiber membrane module according to any of the claims 1 to 3, wherein a space from a lower side of the resin block (200) to an inner surface of the header (300) forms a water collecting section, and the hollow fiber membrane does not protrude into the water collecting section.

5. The hollow fiber membrane module according to any of the claims 1 to 4, wherein the header (300) further comprises a bump (301) on which the lower side of the resin block (200) is mounted.

6. A method for preparing a hollow fiber membrane module, comprising:
arranging a plurality of hollow fiber membranes in a line and preparing a plurality of sheets (10), in which ends of the plural hollow fiber membranes are bound to each other via a resin binding portion (20) so as to be separated a predetermined distance from each other;
stacking the plurality of sheets to prepare a sheet block (100), on which a resin block (200) is formed to have a width (w2) larger than an arrangement width (w1) of the plural hollow fiber membranes;
inserting the sheet block (100) into a header (300), which header (300) is increasingly narrower from an inlet of the header (300) to the center of a bottom thereof such that the resin block (200) contacts an inner wall of the header (300) to secure the resin block (200); and
securing the plural hollow fiber membranes in a space from an upper side of the resin block (200) to an inlet of the header (300) by potting with a potting agent (400).

7. The method according to claim 6, wherein the resin binding portion (20) is formed in a perpendicular direction with respect to a longitudinal direction of the hollow fiber membrane.

8. The method according to claim 6 or 7, wherein the resin binding portion (20) is formed of a thermoplastic resin.

9. The method according to any of the claims 6 to 8, wherein the sheet block (100) is inserted into an empty header (300) in which a sealing agent is not present.

10. The method according to any of the claims 6 to 9, wherein a distal end of the hollow fiber membrane protruding from the resin block (200) is cut out before inserting into the header (300).

11. The method according to any of the claims 6 to 10, wherein a ratio (wl:h) of the arrangement width (w1) of the plural hollow fiber membranes to a stack height (h) of the plurality of sheets is ≥ 3 : 1 to ≤ 10:1 in the sheet block (100).

## Patentansprüche

1. Hohlfasermembranmodul, mit:
einer Sammelleitung (300); und
einem in die Sammelleitung (300) eingesetzten Lagenblock (100),
wobei der Lagenblock aufweist: einen Hohlfasermembranblock, wobei der Hohlfasermembranblock (150) mehrere Hohlfasermembranen aufweist, die in regelmäßigen Abständen in einer vertikalen Richtung der Sammelleitung (300) angeordnet sind, und einen Harzblock (200), der an einem Ende jeder der mehreren Hohlfasermembranen ausgebildet ist und mit einer Innenwand der Sammelleitung (300) in Kontakt steht, um daran befestigt zu werden, wobei der Harzblock (200) derart ausgebildet ist, dass seine Breite (w2) größer ist als eine Anordnungsbreite (w1) der mehreren Hohlfasermembranen,
wobei die Sammelleitung (300) von einem Einlass der Sammelleitung (300) zu ihrer Mitte zunehmend schmaler wird,
der Lagenblock (100) derart in die Sammelleitung (300) eingesetzt ist, dass der Harzblock (200) mit der Innenwand der Sammelleitung (300) in Kontakt steht und daran befestigt ist, und
wobei ein zwischen den mehreren Hohlfasermembranen gebildeter Raum von einer Oberseite des Harzblocks (200) zu einem Einlass der Sammelleitung (300) mit einer Vergussmasse (400) verfüllt ist, um die Hohlfasermembranen zu befestigen.

2. Hohlfasermembranmodul nach Anspruch 1, wobei der Harzblock (200) aus einem thermoplastischen Harz hergestellt ist.

3. Hohlfasermembranmodul nach Anspruch 1 oder 2, wobei ein Raum von einer Unterseite des Harzblocks (200) zu einer Innenfläche der Sammelleitung (300) einen Wassersammelabschnitt bildet, und wobei die Hohlfasermembran in den Wassersammelabschnitt hineinragt.

4. Hohlfasermembranmodul nach einem der Ansprüche 1 bis 3, wobei ein Raum von einer Unterseite des Harzblocks (200) zu einer Innenfläche der Sammelleitung (300) einen Wassersammelabschnitt bildet, und wobei die Hohlfasermembran nicht in den Wassersammelabschnitt hineinragt.

5. Hohlfasermembranmodul nach einem der Ansprüche 1 bis 4, wobei die Sammelleitung (300) ferner eine Erhebung aufweist, auf der die Unterseite des Harzblocks (200) montiert ist.

6. Verfahren zum Herstellen eines Hohlfasermembranmoduls, mit den Schritten:
Anordnen mehrerer Hohlfasermembranen in einer Reihe und Herstellen mehrerer Lagen (10), wobei Enden der mehreren Hohlfasermembranen durch einen Harzverbindungsabschnitt (20) derart miteinander verbunden werden, dass sie in einem vorgegebenen Abstand voneinander getrennt sind;
stapelförmiges Anordnen der mehreren Lagen zum Herstellen eines Lagenblocks (100), auf dem ein Harzblock (200) mit einer Breite (w2) ausgebildet ist, die größer ist als eine Anordnungsbreite (w1) der mehreren Hohlfasermembranen;
Einsetzen des Lagenblocks (100) in eine Sammelleitung (300), wobei die Sammelleitung (300) von einem Einlass der Sammelleitung (300) zur Mitte eines Bodens davon zunehmend schmaler wird, so dass der Harzblock (200) mit einer Innenwand der Sammelleitung (300) in Kontakt kommt, um den Harzblock (200) zu befestigen; und
Befestigen der mehreren Hohlfasermembranen in einem zwischen einer Oberseite des Harzblocks (200) und einem Einlass der Sammelleitung (300) gebildeten Raum durch Verfüllen mit einer Vergussmasse (400).

7. Verfahren nach Anspruch 6, wobei der Harzverbindungsabschnitt (20) bezüglich der Längsrichtung der Hohlfasermembran in einer senkrechten Richtung ausgebildet ist.

8. Verfahren nach Anspruch 6 oder 7, wobei der Harzverbindungsabschnitt (20) aus einem thermoplastischen Harz ausgebildet ist.

9. Verfahren nach einem der Ansprüche 6 bis 8, wobei der Lagenblock (100) in eine leere Sammelleitung (300) eingesetzt wird, in der sich kein Dichtungsmittel befindet.

10. Verfahren nach einem der Ansprüche 6 bis 9, wobei ein vom Harzblock (200) hervorstehendes distales Ende der Hohlfasermembran ausgeschnitten wird, bevor es in die Sammelleitung (300) eingesetzt wird.

11. Verfahren nach einem der Ansprüche 6 bis 10, wobei ein Verhältnis (w1:h) zwischen der Anordnungsbreite (w1) der mehreren Hohlfasermembranen und einer Stapelhöhe (h) der mehreren Lagen im Lagenblock (100) ≥ 3:1 bis ≤ 10:1 beträgt.

## Revendications

1. Module à membranes à fibres creuses comprenant :
un collecteur (300) et
un bloc de feuilles (100) inséré dans le collecteur (300),
dans lequel le bloc de feuilles comprend : un bloc de membrane à fibres creuses, dans lequel le bloc de membrane à fibres creuses (150) comprend une pluralité de membranes à fibres creuses disposées à intervalles réguliers dans une direction verticale du collecteur (300) ; et
un bloc de résine (200) formé à une extrémité de chacune de la pluralité de membranes à fibres creuses et en contact avec une paroi interne du collecteur (300) pour être fixé à celui-ci, dans lequel le bloc de résine (200) est formé pour avoir une largeur (w2) supérieure à une largeur d'agencement (w1) de la pluralité de membranes à fibres creuses, et
dans lequel le collecteur (300) est de plus en plus étroit d'une entrée du collecteur (300) au centre d'un fond de celui-ci,
dans lequel le bloc de feuilles (100) est insérée dans le collecteur (300) de telle sorte que le bloc de résine (200) est en contact avec une paroi interne du collecteur (300) et est fixé à celui-ci, et
dans lequel un espace formé entre la pluralité de membranes à fibres creuses d'un côté supérieur du bloc de résine (200) à une entrée du collecteur (300) est rempli d'un agent d'enrobage (400) pour fixer les membranes à fibres creuses.

2. Module à membranes à fibres creuses selon la revendication 1, dans lequel le bloc de résine (200) est formé d'une résine thermoplastique.

3. Module à membranes à fibres creuses selon la revendication 1 ou 2, dans lequel un espace entre un côté inférieur du bloc de résine (200) et une surface interne du collecteur (300) forme une section de collecte d'eau, et la membrane à fibres creuses fait saillie dans la section de collecte d'eau.

4. Module à membranes à fibres creuses selon l'une quelconque des revendications 1 à 3, dans lequel un espace entre un côté inférieur du bloc de résine (200) et à une surface interne du collecteur (300) forme une section de collecte d'eau, et la membrane à fibres creuses ne fait pas saillie dans la section de collecte d'eau.

5. Module à membranes à fibres creuses selon l'une quelconque des revendications 1 à 4, le collecteur (300) comprend en outre une bosse (301) sur laquelle le côté inférieur du bloc de résine (200) est monté.

6. Procédé de préparation d'un module à membranes à fibres creuses, comprenant :
un agencement d'une pluralité de membranes à fibres creuses dans une ligne et une préparation d'une pluralité de feuilles (10), dans laquelle les extrémités de la pluralité de membranes à fibres creuses sont liées les unes aux autres par une partie de liaison de résine (20) de manière à être séparées d'une distance prédéterminée les unes des autres;
un empilement de la pluralité de feuilles pour préparer un bloc de feuilles (100), sur lequel un bloc de résine (200) est formé pour avoir une largeur (w2) supérieure à une largeur d'agencement (w1) de la pluralité de membranes à fibres creuses;
une insertion du bloc de feuilles (100) dans un collecteur, lequel collecteur (300) est de plus en plus étroit d'une entrée du collecteur (300) au centre d'un fond de celui-ci de sorte que le bloc de résine (200) est en contact avec une paroi interne du collecteur (300) pour fixer le bloc de résine (200); et
une fixation de la pluralité de membranes à fibres creuses dans un espace entre un côté supérieur du bloc de résine (200) et une entrée du collecteur (300) par enrobage avec un agent d'enrobage (400).

7. Procédé selon la revendication 6, dans lequel la partie de liaison de résine (20) est formée dans une direction perpendiculaire par rapport à une direction longitudinale de la membrane à fibres creuses.

8. Procédé selon la revendication 6 ou 7, dans lequel la partie de liaison de résine (20) est formée d'une résine thermoplastique.

9. Procédé selon l'une quelconque des revendications 6 à 8, dans lequel le bloc de feuilles (100) est inséré dans un collecteur vide (300) dans lequel un agent d'étanchéité n'est pas présent.

10. Procédé selon l'une quelconque des revendications 6 à 9, dans lequel une extrémité distale de la membrane à fibres creuses faisant saillie à partir du bloc de résine (200) est découpée avant l'insertion dans le collecteur (300).

11. Procédé selon l'une quelconque des revendications 6 à 10, dans lequel un rapport (w1 : h) de la largeur d'agencement (w1) de la pluralité de membranes à fibres creuses sur une hauteur d'empilement (h) de la pluralité de feuilles va de ≥ 3 : 1 à ≤ 10 : 1 dans le bloc de feuilles (100).
